Europäisches Patentamt

European Patent Office

Office européen des brevets

(19)

(11) **EP 1 227 925 B1**

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(21) Anmeldenummer: **00979238.3**

(22) Anmeldetag: **31.10.2000**

(51) Int Cl.⁷: $B29C\ 47/92$, $G01N\ 11/08$, $B29C\ 47/72$

(86) Internationale Anmeldenummer:
**PCT/AT00/00285**

(87) Internationale Veröffentlichungsnummer:
**WO 01/032397 (10.05.2001 Gazette 2001/19)**

(54) **VORRICHTUNG ZUR BESTIMMUNG DES BETRIEBSZUSTANDES EINES EXTRUDERS**

DEVICE FOR DETERMINING THE OPERATIONAL STATE OF AN EXTRUDER

DISPOSITIF POUR DETERMINER L'ETAT DE MARCHE D'UNE EXTRUDEUSE

(84) Benannte Vertragsstaaten:
**AT BE CH CY DE DK ES FI FR GB GR IE IT LI LU MC NL PT SE**

(30) Priorität: **03.11.1999 AT 75899 U**

(43) Veröffentlichungstag der Anmeldung:
**07.08.2002 Patentblatt 2002/32**

(73) Patentinhaber: **Technoplast Kunststofftechnik Gesellschaft m.b.H.**
**4563 Micheldorf (AT)**

(72) Erfinder: **DORNINGER, Frank**
**A-4563 Micheldorf (AT)**

(74) Vertreter: **Babeluk, Michael, Dipl.-Ing. Mag. Patentanwalt**
**Mariahilfer Gürtel 39/17**
**1150 Wien (AT)**

(56) Entgegenhaltungen:
**DE-A- 2 051 568          DE-A- 4 302 885**
**DE-A- 19 715 630        US-A- 3 365 950**

• **PATENT ABSTRACTS OF JAPAN vol. 013, no. 477 (M-885), 27. Oktober 1989 (1989-10-27) & JP 01 188321 A (NISHIKAWA RUBBER KOGYO KK), 27. Juli 1989 (1989-07-27)**

EP 1 227 925 B1

**Beschreibung**

Die vorliegende Erfindung betrifft eine Vorrichtung zur Bestimmung des Betriebszustandes eines Extruders gemäß dem Oberbegriff von Patentanspruch 1.

Extruder zur Erzeugung von Kunststoffprofilen, wie sie beispielsweise für die Herstellung von Kunststofffenstern benötigt werden, sind üblicherweise so aufgebaut, dass an den Extruderzylinder, in dem die Schnecken angeordnet sind, ein Adapterteil anschließt, der den Übergang zur Extrusionsdüse bildet. In der Extrusionsdüse wird der Querschnittsverlauf des betreffenden Profils bereits weitgehend ausgeformt, um in der anschließenden Trocken- und/oder Nasskalibrierung endgültig festgelegt zu werden. Um die Produktivität des Extrusionsvorganges zu steigern, wird zunehmend mit immer höheren Extrusionsgeschwindigkeiten gearbeitet. Gleichzeitig steigen die Qualitätsanforderungen an die hergestellten Profile. Eine hohe Qualität der Profile kann jedoch bei höheren Extrusionsgeschwindigkeiten nur bei extrem sorgfältiger Abstimmung der Extrusionswerkzeuge bei gleichzeitiger Einhaltung eines genau definierten Betriebszustandes im Extruder erreicht werden.

Um den Betriebszustand des Extruders zu erfassen, ist es bekannt, im Bereich des Adapterteils den Druck und die Temperatur der Schmelze zu erfassen. Zu diesem Zweck wird beispielsweise ein Drucksensor und ein Temperatursensor im Bereich des Fließkanals der Schmelze angeordnet. Dies ermöglicht die Erfassung des Betriebszustandes des Extruders. Bei der Produktion eines neuen Extrusionswerkzeugs wird beim Hersteller des Werkzeuges die Abstimmung durchgeführt. Dabei wird so vorgegangen, dass dem Werkzeug ein Extruder vorgeschaltet wird, der baugleich oder zumindest ähnlich dem Extruder ist, mit dem das Werkzeug nach Auslieferung beim Kunden betrieben wird. Wesentlich für die Abstimmung ist auch die Verwendung des gleichen Grundmaterials wie beim späteren Produktionseinsatz.

Es hat sich nun herausgestellt, dass bei hohen Extrusionsgeschwindigkeiten oder bei der Extrusion von Profilen mit geringen Wandstärken sowie generell bei hohen Anforderungen an die Qualität des Profils, etwa bei engen Toleranzen, durchaus selbst bei optimaler Abstimmung eines Werkzeuges beim Hersteller nach Auslieferung des Werkzeuges beim Kunden nur unbefriedigende Ergebnisse erzielt werden. Eine Ursache dafür ist offensichtlich, dass selbst baugleiche Extruder geringfügige Unterschiede aufweisen, die beispielsweise durch Herstellungstoleranzen, Verschleiß oder dergleichen bedingt sind. Die Erfinder der vorliegenden Erfindung haben erkannt, dass solche Unterschiede sogar dann vorliegen können, wenn die Messungen im Adapterteil identische Werte für Temperatur und Druck zeigen. Dies hat nach Ansicht der Erfinder mit der Tatsache zu tun, dass die rheologischen Eigenschaften der . Kunststoffschmelze mit den Parametern Druck und Temperatur allein nicht ausreichend beschrieben werden können. Eine Folge dieser Tatsache ist, dass nach Aufbau des Extrusionswerkzeugs beim Kunden aufwendige Abstimmungsfahrten durchgeführt werden müssen, bei denen versucht wird, durch Änderungen der Extrusionsbedingungen, wie etwa Schneckendrehzahl, Heizleistung und dergleichen, festgestellte Mängel des Profils zu beseitigen. Da es sehr schwierig ist herauszufinden, welche Abweichung für das Auftreten eines bestimmten Mangels, wie etwa eine verschlechterte Oberflächenqualität in einem bestimmten Teilbereich des Profils, verantwortlich ist, sind solche Arbeiten langwierig und mühsam.

Weiters ist es bekannt, an einen Extruder sogenannte Rheometerdüsen anzuflanschen, die beispielsweise als Schlitzdüsen ausgebildet sind. Die auf diese Weise gewonnen Materialdaten haben sich jedoch insbesondere bei dem Werkstoff PVC als nicht übermäßig aussagekräftig für den tatsächlichen Extrusionsvorgang erwiesen, das heißt, dass eine Feinjustierung aufgrund der so gewonnenen Daten nicht möglich ist.

Aus der DE 36 42 757 A ist eine Messvorrichtung bekannt, bei der rheologische Eigenschaften eines Extrusionsmaterials durch Messung des Druckabfalls im Hauptstrom durchgeführt werden. Ein solches Verfahren ist möglich, wenn von einem Extruder Leitungen von einzelnen Spinndüsen ausgehen. Bei Extrusionsvorrichtungen, bei denen an einen Extruder direkt ein Extrusionswerkzeug anschließt sind solche Messverfahren jedoch nicht in befriedigender Weise einsetzbar.

Die EP 0 899 556 A betrifft eine Messvorrichtung, bei der Messungen anhand eines Materialstroms durchgeführt werden, der direkt aus dem Extruder gewonnen wird. Es hat sich jedoch herausgestellt, dass auf diese Weise Messergebnisse erhalten werden, die von geringer Aussagekraft sind.

Die US 3,365,950 A zeigt eine Vorrichtung zur Druckmessung in einer Kunststoffschmelze, bei der in einem von einem Behälter abzweigenden Kanal ein Kolben vorgesehen ist, der durch die Schmelze nach außen gedrückt wird. Die Druckkraft auf den Kolben wird einerseits durch den Staudruck bewirkt, der auf die Querschnittsfläche des Kolbens ausgeübt wird und andererseits durch die Scherspannungen, des am Kolben vorbeifließenden Mediums. Mit einer solchen Vorrichtung ist eine mehr oder weniger große Genauigkeit bei der Messung des augenblicklich vorliegenden Drucks erreichbar, es ist jedoch in keiner Weise eine vollständige Aussage über den jeweiligen rheologischen Zustand der Kunststoffmasse möglich.

Aufgabe der vorliegenden Erfindung ist es, eine Vorrichtung der oben genannten Art so weiterzubilden, dass der Betriebszustand eines Extrusionssystems, bestehend aus einem Extruder und den Werkzeugen in Zusammenhang mit dem jeweiligen Material so genau erfasst werden kann, dass die Abstimmung der Extrusionswerkzeuge erleichtert wird und Schwankungen der Materialeigenschaften aufgrund von Rezepturtoleranzen, Mischungstoleranzen oder Feuchtigkeitsschwankungen rascherkannt werden, sowie die Produktionsstabilität verbessert wird.

Erfindungsgemäß werden diese Aufgaben durch die Merkmale des Patentanspruches 1 gelöst.

Das Vorsehen einer stufenlos verstellbaren Drossel ermöglicht es verschiedene Fließgeschwindigkeiten in dem Bypasskanal einzustellen, wodurch nicht nur ein einziger Messpunkt gewonnen werden kann, sondern eine gesamte Messkurve aufgenommen werden kann.

Aufgrund eines genau definierten Messpunktes (Abzweigung des Schmelzestromes für die rheologischen Messungen) können rheologische Daten erfasst werden, die wiederum zu Vergleichszwecken geeignet sind. Aufgrund des äußerst komplexen Viskositätsverhaltens der verwendeten PVC-Materialien können aus einer Druck- und Temperaturmessung allein eine rheologische Beschreibung des Materialverhaltens im Schmelzestrom nicht abgeleitet werden. Mit der gegenständlichen Erfindung wird aber gerade darauf besonders Rücksicht genommen.

Der Vorteil der gegenständlichen Erfindung besteht darin, dass mit einer verhältnismäßig einfachen und kleinen Messapparatur das Viskositätsverhalten der Kunststoffschmelze in einem jeweils stationären, unveränderten Betrieb des Extrusionssystems unter Produktionsbedingungen in einem abgezweigten Schmelzstrom untersucht wird, dessen Zuströmkanal mit einer variablen Drossel versehen ist, derart, dass der abgezweigte Schmelzstrom mit verändertem Schmelzdruck durch speziell ausgeführte Kapillare geführt wird. Aus den Teilvolumenströmen (Massenströme) und Messdrücken bei gleichen Massentemperatur kann auf das rheologische Materialverhalten geschlossen werden.

Es hat sich herausgestellt, dass unter diesen Bedingungen gleichsam ein Fingerabdruck der Kunststoffschmelze (und zwar ein "rheologischer Fingerprint") im Extruder gewonnen werden kann, der das Extrusionsverhalten charakterisiert.

Eine geringst mögliche Beeinflussung der Schmelze im Fließkanal wird bei einfachem Aufbau erreicht, wenn der Messkanal in einem Rohr ausgebildet ist, das in eine Bohrung am Adapterteil oder in der Extrusionsdüse eingeführt ist und wenn eine vordere Öffnung des Rohres im Bereich einer Wand des Fließkanals der Schmelze angeordnet ist.

Es ist möglich, dass am Messkanal zwei Druckaufnehmer angeordnet sind, die in axialer Richtung des Rohres einen Abstand voneinander aufweisen. Das Vorsehen von zwei Druckaufnehmern ermöglicht eine direkte Messung der Viskosität des Materials, die sich aus der Druckdifferenz zwischen den Druckaufnehmern ableiten lässt.

Eine besondere Vereinfachung der konstruktiven Ausführungsform ergibt sich, wenn der Druckaufnehmer außerhalb des Adapterteils oder der Extrusionsdüse vorgesehen ist.

Durch die Messung an verschiedenen Messpunkten, die über den Querschnitt der Schmelze verteilt sind, kann eine wesentliche Verbesserung der Information über den Betriebszustand des Extruders gewonnen werden. Daher kann vorgesehen sein, dass das Rohr in einer Bohrung des Adapterteils in axialer Richtung verschiebbar angeordnet ist, wobei eine vordere Öffnung des Rohres unterschiedlich weit in einen Fließkanal der Schmelze eindringt. Alternativ dazu ist es möglich, dass mehrere Messkanäle vorgesehen sind, die an unterschiedlichen Stellen mit dem Fließkanal in Verbindung stehen.

Eine weitere wesentliche qualitative Verbesserung der gewonnenen Informationen kann erreicht werden, wenn am Messkanal weiters mindestens ein Temperatursensor vorgesehen ist. Auf diese Weise ist es beispielsweise möglich, ein Temperaturprofil über den Querschnittsverlauf der Schmelze im Adapterteil zu erstellen.

Eine besonders wirksame und einfache Steuerung des Extrusionsprozesses ist möglich, wenn eine Einrichtung zur Auswertung und Anzeige der Messergebnisse vorgesehen ist, die mit dem Messgerät verbunden ist.

In einer besonders bevorzugten Ausführungsvariante der Erfindung ist vorgesehen, dass der Messkanal einen Zufuhrabschnitt, eine Messkammer und mindestens eine stromabwärts der Messkammer angeordnete Kapillare aufweist, und dass der Druckaufnehmer im Bereich der Messkammer angeordnet ist. Auf diese Weise können die Messungenauigkeiten minimiert werden.

Eine besonders einfache Auswertung der Messergebnisse ist möglich, wenn mindestens zwei Kapillaren vorgesehen sind, deren Verhältnis von Länge zu Durchmesser näherungsweise gleich ist. Zusätzlich dazu kann vorgesehen sein, dass mindestens eine Kapillare vorgesehen ist, deren Länge kleiner ist als der zweifache Durchmesser, wobei diese Kapillare vorzugsweise verschließbar ausgeführt ist. Auf diese Weise kann der Einlaufdruckverlust in die Kapillare im Wesentlichen unabhängig vom Druckverlust in der Kapillare bestimmt werden, so dass es möglich ist, den Einfluss des Einlaufs in die Kapillare herauszurechnen.

In der Folge wird die Erfindung anhand der in den Figuren dargestellten Ausführungsbeispiele näher erläutert. Es zeigen:

Fig. 1    schematisch eine erste Ausführungsvariante der Erfindung,

Fig. 2    ein Detail einer weiteren Ausführungsvariante der Erfindung,

Fig. 3    eine weitere Ausführungsvariante der Erfindung,

Fig. 4    einen Querschnitt durch die Vorrichtung im Bereich der Kapillaren bei einer weiteren Ausführungsvariante der Erfindung,

Fig. 5    einen Schnitt nach Linie V - V in Fig. 4 und

Fig. 6    einen Schnitt nach Linie VI - VI in Fig. 4.

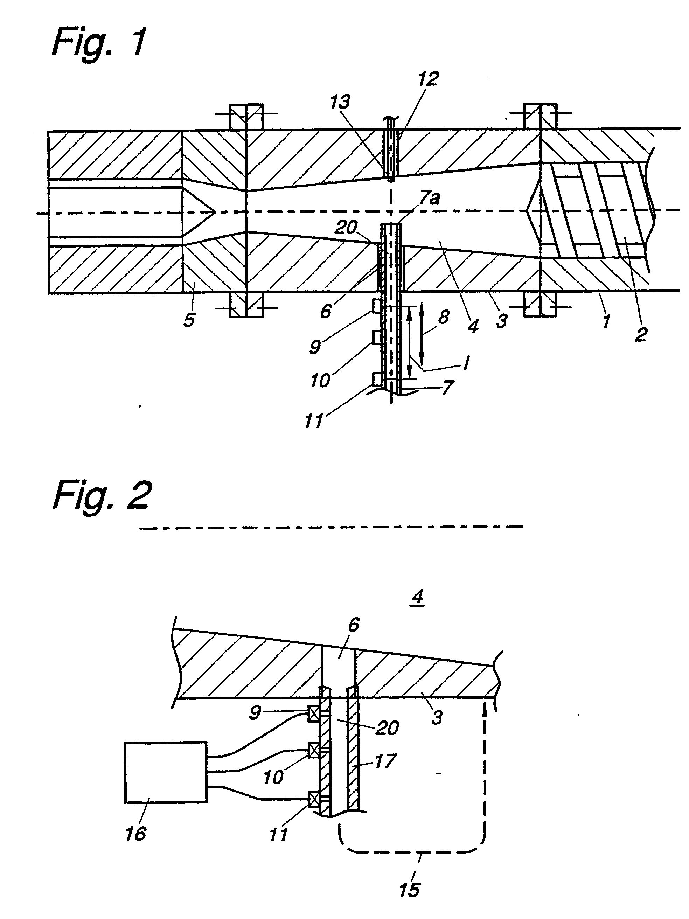

In der Fig. 1 ist schematisch der stromabwärtige Teil eines Extrusionszylinders 1 mit darin angeordneten Schnecken 2 dargestellt. An den Extrusionszylinder 1 ist ein Adapterteil 3 angeschraubt, das einen sich in Extrusionsrichtung verjüngenden Fließkanal 4 aufweist. Gegebenenfalls kann der Adapterteil mehrteilig ausgebildet sein. In den Fließkanal 4 wird die Kunststoffschmelze homogenisiert, und der Querschnitt verändert sich kontinuierlich von der brillenförmigen Öffnung am Ausgang des Extruderzylinders zu einem runden Querschnitt. An den Adapterteil 4 schließt die Extrusionsdüse 5 an, in der die eigentliche Querschnittsform des zu erzeugenden Profils ausgebildet wird. Im mittleren Abschnitt des Adapterteils 3 ist eine radial ausgerichtete Bohrung 6 vorgesehen, in der ein Rohr 7 in Axialrichtung (Doppelpfeil 8) beweglich geführt ist, in dem ein Messkanal 20 mit rechteckigem Querschnitt ausgebildet ist. Dadurch wird erreicht, dass die vordere Öffnung 7a des Rohres 7 unterschiedlich weit in den Fließkanal 4 des Adapterteils 3 eindringt. Zur Verdeutlichung der Darstellung ist die Dicke des Rohres 7 übertrieben dargestellt. Während des Messvorgangs wird durch den Messkanal 20 kontinuierlich Kunststoffschmelze aus dem Fließkanal 4 herausgeführt. Außerhalb des Adapterteils 3 sind an dem Rohr 7 ein erster Druckaufnehmer 9, ein Temperatursensor 10 und ein weiterer Druckaufnehmer 11 angeordnet. Die beiden Druckaufnehmer sind in einem Abstand I von etwa 100 mm angeordnet. Durch diese Messgeräte kann der Verlauf sowohl der Temperatur als auch des Drucks über den Querschnitt des Fließkanals 4 bestimmt werden. Besonders vorteilhaft ist jedoch, dass die Viskosität der Kunststoffschmelze nicht nur indirekt über Druck, Temperatur und die bekannten Materialeigenschaften bestimmt werden kann, sondern auch direkt aus dem ermittelten Druckabfall zwischen dem ersten und dem weiteren Druckaufnehmer 9 bzw. 11 berechnet werden kann.

In einer weiteren Bohrung 12 ist in herkömmlicher Weise ein weiterer Temperatursensor 13 angeordnet, der zusätzlich laufend die Temperatur an einem vorbestimmten Punkt des Fließkanals 4 erfasst.

Bei der Ausführungsvariante von Fig. 2 ist ein Rohr 17 mit einem Messkanal 20 direkt in eine Bohrung 6 des Adapterteils 3 eingeschraubt, um so mit dem Fließkanal 4 in Verbindung zu stehen. Die Druckaufnehmer 9 und 11 und der Temperatursensor 10 stehen mit einer schematisch angedeuteten Einrichtung 16 zur Auswertung und Anzeige der Messergebnisse in Verbindung. Mit 15 ist schematisch eine Möglichkeit gekennzeichnet, die zur Rückführung der durch den Messkanal 20 abgezogenen Schmelze in den Extruder dient. Dazu wird es jedoch im allgemeinen erforderlich sein, den Messkanal in den Adapterteil zu integrieren.

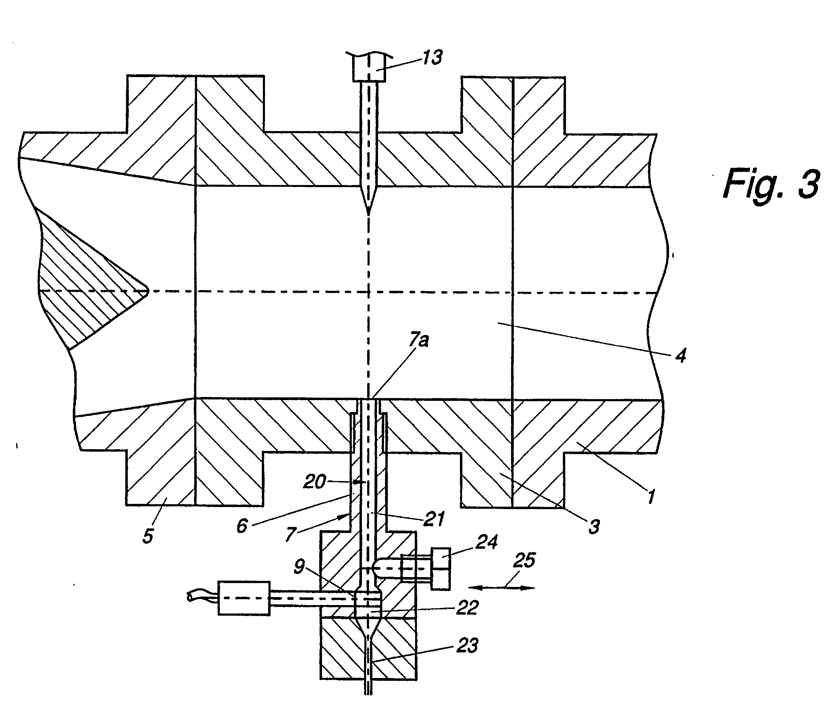

Bei der Ausführungsvariante der Fig. 3 besteht der Messkanal 20 aus einem Zufuhrabschnitt 21, einer Messkammer 22 und einer Kapillare 23, die stromabwärts der Messkammer 22 angeordnet ist. Ein Druckaufnehmer 9 ist im Bereich der Messkammer 22 angeordnet. Stromaufwärts der Messkammer 22 ist im Zufuhrabschnitt 21 eine einstellbare Drossel 24 vorgesehen, durch die der Zuströmquerschnitt verändert werden kann. Die Drossel 24 besteht aus einer Zunge, die in Richtung des Doppelpfeils 25 beweglich im Rohr 7 angeordnet ist.

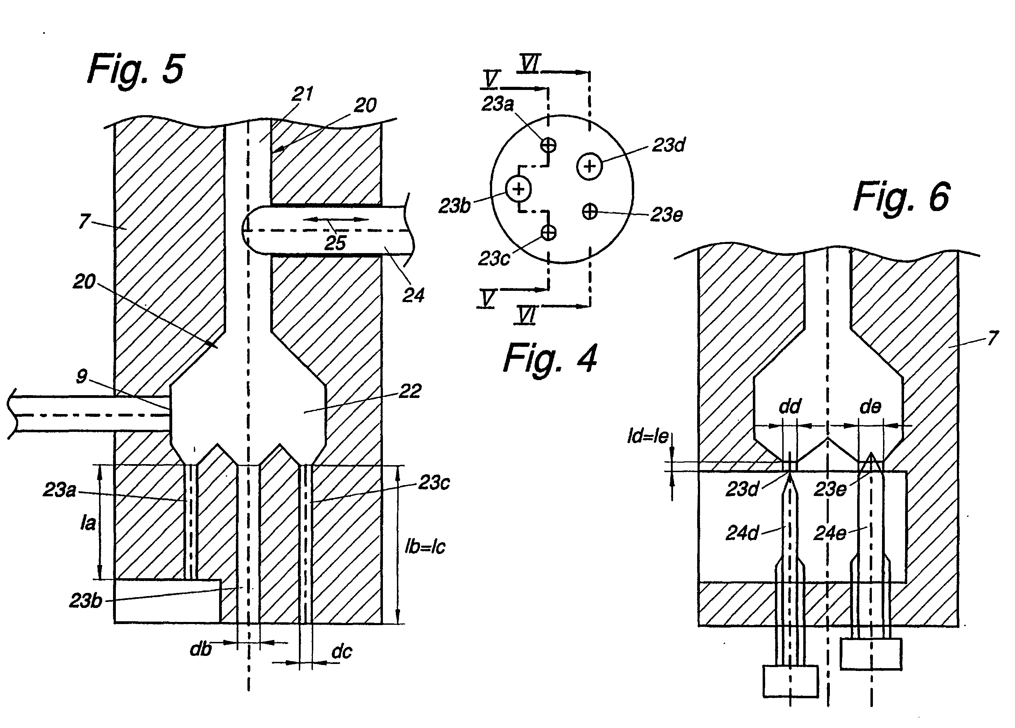

Die Ausführungsvariante der Fig. 4 bis 6 entspricht im Wesentlichen der von Fig. 3 mit dem Unterschied, dass insgesamt fünf Kapillaren 23a, 23b, 23c, 23d und 23e vorgesehen sind. Die Längen und Durchmesser der einzelnen Kapillaren werden entsprechend der folgenden Tabelle gewählt:

| Kapillare | Länge (mm) | | Durchmesser (mm) | |
|-----------|------------|----|------------------|---|
| 23a | Ia | 30 | da | 2 |
| 23b | Ib | 45 | db | 3 |
| 23c | Ic | 45 | dc | 2 |
| 23d | Id | 1 | dd | 2 |
| 23e | Ie | 1 | de | 3 |

Es ist zu beachten, dass das Verhältnis von Länge zu Durchmesser sowohl bei der ersten, als auch bei der zweiten Kapillare etwa gleich ist, das heißt, es gilt

$$Ia/da = Ib/db = 15$$

Da auf diese Weise analoge Verhältnisse hinsichtlich der Schubspannung geschaffen werden, kann ein etwaiges Wandgleiten durch Vergleich der Messkurven leicht erfasst und quantifiziert werden.

Weiters kann ersehen werden, dass die Längen der vierten und der fünften Kapillare 23d und 23e in der Größenordnung des Durchmessers liegen. Auf diese Weise wird der Strömungswiderstand durch die Kapillaren primär vom Einlaufdruckverlust bestimmt. Da die Durchmesser dd, de dieser beiden Kapillaren 23d, 23e den Durchmessern da, db, dc der ersten drei Kapillaren 23a, 23b, 23c entsprechen, kann auf diese Weise auch der Druckverlust in der Kapillaren ohne den Einströmdruckverlust bestimmt werden.

Die Kapillaren 23d und 23e sind durch Schrauben 24d und 24e verschließbar, um im stationären Betrieb den Materialverlust gering halten zu können. Weiters kann durch das Verschließen der Kapillaren 23d und 23e eine mögliche Beeinflussung der übrigen Kapillaren 23a, 23b und 23c vermieden werden.

In der Folge wird die Funktionsweise der obigen Ausführungsvarianten näher erläutert. Zur rheologischen Beschreibung der Kunststoffschmelze mit einem Fließgesetz sind der Volumenstrom, der erforderliche Druckverlauf, die Schmelzetemperatur und die Abmessungen der Kapillare zu berücksichtigen. Mit der stufenlos veränderlichen Drossel 24 kann der Volumenstrom bei unverändertem Extruderbetriebszustand variiert werden. Damit kann für eine bekannte Kapillarengeometrie der Volumenstrom als Funktion des Druckverbrauches gemessen werden und es kann eine für den Betriebszustand des Extruders und die verwendete Kunststoffrezeptur charakteristische Fließkurve ermittelt werden. Unter Zugrundelegung eines rheologischen Materialgesetzes, zum Beispiel dem CARREAU-Gesetz, können daraus die zum mathematischen Beschreibung der erforderlichen Parameter gewonnen werden. Der Vorteil diese Vorgangsweise liegt darin, dass das rheologische Verhalten der Kunststoffschmelze in der Messapparatur so beschrieben werden kann, dass es ausschließlich vom Extruder und dem verwendeten Kunststoffmaterial abhängig ist. Daher können bei unveränderter Rezeptur Abweichungen direkt auf eine unterschiedliche Prozessführung des Extruders oder auf Abweichungen bei an sich baugleichen Extrudern, zum Beispiel zufolge von Toleranzen oder Abnützung zurückgeführt werden. Umgekehrt können Abweichungen bei ein und demselben Extruder und unveränderter Prozessführung auf Rezepturunterschiede zurückgeführt werden. Durch gezieltes Nachjustieren der Prozessparameter kann eine Angleichung der Fließkurve an eine vorab bestimmte Masterkurve vorgenommen werden. Somit können mit dieser Messapparatur sowohl Einflüsse von Material, Extruder als auch Prozessführung erkannt und dokumentiert werden. Damit ist es möglich, gezielte Maßnahmen zur Angleichung der rheologischen Eigenschaften an die vordefinierten Originaleigenschaften gesetzt werden.

Durch die erfindungsgemäße Vorrichtung ist es möglich, sich ein wesentlich genaueres Bild über den Zustand des Materials in einem Extruder zu verschaffen als dies bisher möglich war. Wenn ein bestimmtes Werkzeug auf einen bestimmten Extruder genau abgestimmt worden ist, so kann durch die erfindungsgemäße Vorrichtung die Abstimmung dieses Werkzeugs auf einen anderen Extruder wesentlich erleichtert werden. In diesem Fall muss dieser andere Extruder lediglich so eingestellt werden, dass der Druck- und Temperaturverlauf im Fließkanal 4 möglichst genau dem Druck- bzw. dem Temperaturverlauf des ursprünglichen Extruders entspricht. Dies ist für einen Fachmann im allgemeinen durch gezielte Veränderungen der Betriebsparameter, wie Extruderheizung, Schneckendrehzahl oder dergleichen verhältnismäßig leicht möglich. Untersuchungen haben gezeigt, dass ein einmal gut abgestimmtes Extrusionswerkzeug sogar auf Extrudern unterschiedlichen Typs hervorragende Ergebnisse liefern kann, sofern die Messergebnisse der erfindungsgemäßen Vorrichtung in möglichst guter Übereinstimmung gebracht worden sind. Jedenfalls sind Maßnahmen zur Angleichung der Druck- bzw. Temperaturprofile wesentlich leichter durchzuführen, als Abstimmungsarbeiten, bei denen festgestellte Profilmängel durch Änderungen der Betriebsparameter des Extruders ausgeglichen werden, wenn die Informationen der erfindungsgemäßen Vorrichtung nicht vorliegen.

Ein besonderer Vorteil der erfindungsgemäßen Lösung besteht darin, dass die üblicherweise vorhandenen Bohrungen im Adapterteil 3 dazu verwendet werden können, das Rohr 7, 17 einzuführen bzw. zu befestigen.

**Patentansprüche**

1. Vorrichtung zur Bestimmung des Betriebszustandes eines Extruders, zur Erzeugung eines Kunststoffprofils, wobei der Extruder einen Extrusionszylinder (1) mit mindestens einer Schnecke (2), einen Adapterteil (3) und eine Extrusionsdüse (5) aufweist, die einen Fließkanal (4) für die Schmelze bilden, und wobei stromabwärts der Schnecke (2) mindestens ein Messgerät zur Bestimmung der Qualität der Schmelze vorgesehen ist, das einen Messkanal (20) umfasst, der mit dem Fließkanal (4) im Bereich des Adapterteils (3) in Verbindung steht und durch den während des Messvorganges kontinuierlich Schmelze aus dem Fließkanal (4) abgezogen wird, und dass an dem Messkanal (20) mindestens ein Druckaufnehmer (9, 11) angeordnet ist, **dadurch gekennzeichnet, dass** zur umfassenden Erfassung des rheologischen Zustands der Schmelze stromaufwärts des Druckaufnehmers (9, 11) mindestens eine stufenlos einstellbare Drossel (24) vorgesehen ist.

2. Vorrichtung nach Anspruch 1, **dadurch gekennzeichnet, dass** der Messkanal (20) in einem Rohr (7, 17) ausgebildet ist, das in eine Bohrung (6) am Adapterteil (3) oder in der Extrusionsdüse eingeführt ist und dass eine vordere Öffnung (7a) des Rohres (7, 17) im Bereich einer Wand des Fließkanals (4) der Schmelze angeordnet ist.

3. Vorrichtung nach einem der Ansprüche 1 oder 2, **dadurch gekennzeichnet, dass** der Druckaufnehmer (9, 11) außerhalb des Adapterteils (3) oder der Extrusionsdüse (5) vorgesehen ist.

4. Vorrichtung nach einem der Ansprüche 1 bis 3, **dadurch gekennzeichnet, dass** am Rohr (7) weiters mindestens ein Temperatursensor (10) vorgesehen ist.

**5.** Vorrichtung nach einem der Ansprüche 1 bis 4, **dadurch gekennzeichnet, dass** eine Einrichtung (16) zur Auswertung und Anzeige der Messergebnisse vorgesehen ist, die mit dem Messgerät verbunden ist.

**6.** Vorrichtung nach einem der Ansprüche 1 bis 5, **dadurch gekennzeichnet, dass** der Messkanal (20) einen Zufuhrabschnitt (21), eine Messkammer (22) und mindestens eine stromabwärts der Messkammer (22) angeordnete Kapillare (23, 23a, 23b, 23c, 23d, 23e) aufweist, und dass der Druckaufnehmer (9) im Bereich der Messkammer (22) angeordnet ist.

**7.** Vorrichtung nach Anspruch 6, **dadurch gekennzeichnet, dass** mehrere Kapillaren (23a, 23b, 23c, 23d, 23e) mit unterschiedlichem Durchmesser (da, db, dc, dd, de) vorgesehen sind.

**8.** Vorrichtung nach Anspruch 7, **dadurch gekennzeichnet, dass** mindestens zwei Kapillaren (23a, 23b, 23c, 23d, 23e) vorgesehen sind, deren Verhältnis von Länge (Ia, Ib, Ic, Id, Ie) zu Durchmesser (da, db, dc, dd, de) näherungsweise gleich ist.

**9.** Vorrichtung nach einem der Ansprüche 7 oder 8, **dadurch gekennzeichnet, dass** mindestens eine Kapillare (23a, 23b, 23c, 23d, 23e) vorgesehen ist, deren Länge (Ia, Ib, Ic, Id, Ie) kleiner ist als der zweifache Durchmesser (da, db, dc, dd, de), wobei diese Kapillare (23a, 23b, 23c, 23d, 23e) vorzugsweise verschließbar ausgeführt ist.

**Claims**

**1.** An apparatus for determining the operational state of an extruder that is used for the production of a plastic profile, with the extruder comprising an extrusion cylinder (1) with at least one endless screw (2), an adapter part (3) and an extrusion die (5) which form a flow channel (4) for the melt and with at least one measuring device for determining the quality of the melt being provided downstream of the endless screw (2), said measuring device comprises a measuring channel (20) which is in connection with the flow channel (4) in the zone of the adapter part (3) and through which melt is branched off from the flow channel (4) in a continuous way during the measuring process, and that at least one pressure sensor (9, 11) is disposed at the measuring channel (20), **characterized in that** for the comprehensive detection of the rheological state of the melt at least one continuously adjustable throttle (24) is provided upstream of the pressure sensor (9, 11).

**2.** An apparatus as claimed in claim 1, **characterized in that** the measuring channel (20) is arranged in a tube (7, 17) which is introduced into a bore (6) in the adapter part (3) or in the extrusion die and that a front opening (7a) of the tube (7, 17) is disposed in the zone of a wall of the flow channel (4) of the melt.

**3.** An apparatus as claimed in one of the claims 1 or 2, **characterized in that** the pressure sensor (9, 11) is disposed outside of the adapter part (3) or the extrusion die (5).

**4.** An apparatus as claimed in one of the claims 1 to 3, **characterized in that** at least one temperature sensor (10) is further provided at the tube (7).

**5.** An apparatus as claimed in one of the claims 1 to 4, **characterized in that** a device (16) for evaluating and displaying the measuring results is provided which is connected with the measuring device.

**6.** An apparatus as claimed in one of the claims 1 to 5, **characterized in that** the measuring channel (20) is provided with a feed section (21), a measuring chamber (22) and at least one capillary (23, 23a, 23b, 23c, 23d, 23e) disposed downstream of the measuring chamber (22), and that the pressure sensor (9) is disposed in the zone of the measuring chamber (22).

**7.** An apparatus as claimed in claim 6, **characterized in that** several capillaries (23a, 23b, 23c, 23d, 23e) with different diameters (da, db, dc, dd, de) are provided.

**8.** An apparatus as claimed in claim 7, **characterized in that** at least two capillaries (23a, 23b, 23c, 23d, 23e) are provided whose ratio of length (Ia, Ib, Ic, Id, Ie) of diameter (da, db, dc, dd, de) is equivalent by approximation.

**9.** An apparatus as claimed in one of the claims 7 or 8, **characterized in that** at least one capillary (23a, 23b, 23c, 23d, 23e) is provided whose length (Ia, Ib, Ic, Id, Ie) is smaller than twice the diameter (da, db, dc, dd, de), with said capillaries (23a, 23b, 23c, 23d, 23e) preferably being provided with a closeable configuration.

**Revendications**

**1.** Dispositif pour déterminer l'état de fonctionnement d'une extrudeuse, générant un profil de matière plastique, selon lequel
l'extrudeuse comporte un cylindre d'extrusion (1) ayant au moins une vis (2), un adaptateur (3) et une buse d'extrusion (5) constituant un canal de fluage (4) pour la matière en fusion, avec en aval de la vis (2) au moins un appareil de mesure pour déterminer la qualité du produit en fusion, cet appareil comportant un canal de mesure (20) relié au canal de fluage (4) au niveau de l'adaptateur (3) et à travers lequel, pendant l'opération de mesure, on extrait en continu du produit en fusion du canal de fluage (4), le canal de mesure (20) comportant au moins un capteur de pression (9, 11),
**caractérisé par**
au moins un organe d'étranglement (24) réglable en continu pour saisir de manière étendue l'état rhéologique du produit en fusion en amont du capteur de pression (9, 11).

2. Dispositif selon la revendication 1,
**caractérisé en ce que**
le canal de mesure (20) est réalisé sous la forme d'un tube (7, 17) introduit dans un perçage (6) de l'adaptateur (3) ou de la buse d'extrusion, et l'extrémité avant (7a) du tube (7, 17) est prévue au niveau d'une paroi du canal de fluage (4) du produit en fusion.

3. Dispositif selon l'une quelconque des revendications 1 ou 2,
**caractérisé en ce que**
le capteur de pression (9, 11) est prévu à l'extérieur de l'adaptateur (3) ou de la buse d'extrusion (5).

4. Dispositif selon l'une quelconque des revendications 1 à 3,
**caractérisé en ce que**
le tube (7) comporte en outre au moins un capteur de température (10).

5. Dispositif selon l'une quelconque des revendications 1 à 4,
**caractérisé par**
une installation (16) reliée à l'appareil de mesure pour exploiter et afficher les résultats de mesure.

6. Dispositif selon l'une quelconque des revendications 1 à 5,
**caractérisé en ce que**
le canal de mesure (20) comporte un segment d'alimentation (21), une chambre de mesure (22) et au moins des tubes capillaires (23, 23a, 23b, 23c, 23d, 23e) en aval de la chambre de mesure (22), et le capteur de pression (9) est prévu au niveau de la chambre de mesure (22).

7. Dispositif selon la revendication 6,
**caractérisé par**
plusieurs tubes capillaires (23a, 23b, 23c, 23d, 23e) à diamètres différents (da, db, dc, dd, de).

8. Dispositif selon la revendication 7,
**caractérisé par**
au moins deux tubes capillaires (23a, 23b, 23c, 23d, 23e) dont les rapports entre la longueur (Ia, Ib, Ic, Id, Ie) et le diamètre (da, db, dc, dd, de) sont pratiquement égaux.

9. Dispositif selon l'une quelconque des revendications 7 ou 8,
**caractérisé par**
au moins un tube capillaire (23a, 23b, 23c, 23d, 23e) dont la longueur (Ia, Ib, Ic, Id, Ie) est inférieure au double du diamètre (da, db, dc, dd, de), ce tube capillaire (23a, 23b, 23c, 23d, 23e) pouvant de préférence être fermé.

EP 1 227 925 B1

**Fig. 1**

**Fig. 2**

Fig. 3

Fig. 6

Fig. 4

Fig. 5